# FASCICULE DE BREVET EUROPEEN

(11) **EP 2 736 643 B1**
(45) Date de publication et mention de la délivrance du brevet: **28.10.2015**
(21) Numéro de dépôt: 12753759.5
(22) Date de dépôt: 23.07.2012
(51) Int. Cl.: B05B 11/00, B01L 3/02, G01F 11/02

(54) **DISTRIBUTEUR DE PRODUIT FLUIDE**
SPENDER FÜR EIN FLUIDPRODUKT
FLUID-PRODUCT DISPENSER

(30) Priorité: 25.07.2011 FR 1156778
(43) Date de publication de la demande: 04.06.2014
(73) Titulaire: Aptar France SAS, 27110 Le Neubourg (FR)
(72) Inventeur: DUQUET, Frédéric, F-78121 Crespières (FR); MARTINS-REIS, Sandra, F-92190 Meudon (FR); MOREAU, Francis, F-76300 Sotteville les Rouen (FR)
(74) Mandataire: CAPRI
(86) Numéro de dépôt international: PCT/FR2012/051744
(87) Numéro de publication internationale: WO 2013/014384

(56) Documents cités:
- WO-A1-2009/073482
- WO-A2-2011/090251
- JP-U- H0 722 958
- US-A- 5 320 810
- US-B1- 6 533 482

## Description

La présente invention concerne un distributeur de produit fluide comprenant un réservoir de produit fluide et une pompe manuelle classique définissant une chambre de pompe de volume variable entre un corps de pompe et une tige d'actionnement. Le déplacement de la tige d'actionnement a pour but de faire varier le volume de la chambre de pompe qui définit en position de repos un volume maximal prédéterminé. Ce type de distributeur est très fréquemment utilisé dans les domaines de la parfumerie, de la cosmétique ou encore de la pharmacie pour distribuer des produits fluides de viscosités diverses.

Dans l'art antérieur, il existe également des distributeurs sous forme de pipettes comprenant une canule de distribution formant une sortie de distribution apte à former une goutte de produit fluide qui se sépare de la canule par gravité. En général, la canule est associée à une sorte de poire d'aspiration permettant d'aspirer du produit fluide dans la canule à travers la sortie de distribution. Ensuite, la canule et sa poire associée sont retirées du réservoir de produit fluide, et la distribution s'effectue alors en écrasant la poire pour refouler le produit fluide à travers la sortie de distribution sous forme de goutte à goutte. En d'autres termes, le produit fluide entre et sort de la canule par sa sortie de distribution. Une fois la canule vidée, elle est à nouveau déposée dans le réservoir de produit fluide pour un actionnement ultérieur. Il s'agit là d'une conception tout à fait classique pour un distributeur sous forme de pipette qui est fréquemment utilisé pour la distribution de sérum dans le domaine de la parfumerie et de la cosmétique. L'utilisateur est attaché à ce type de distributeur/pipette qui permet de distribuer le sérum de manière dosée, à savoir goutte par goutte.

Il existe toutefois un inconvénient avec ce type de distributeur/pipette qui est lié au fait que la canule trempe dans le produit fluide stocké dans le réservoir. De ce fait, du produit fluide adhère à la paroi externe de la canule et se collecte par gravité au niveau de la sortie de distribution, de sorte qu'une goutte partielle ou complète peut se former à cet endroit. Cette goutte partielle ou complète peut être perdue en manipulant la canule, ou encore augmenter le volume de la goutte distribuée de manière à fausser le dosage. Dans tous les cas, le produit fluide situé sur la paroi externe de la canule ne peut que nuire au bon fonctionnement du distributeur/pipette. D'autre part, il y a aussi un risque de renverser le réservoir, qui est laissé ouvert.

Chacun des documents FR 2 645 509 A1 et FR 2 640 589 A1 décrit un distributeur selon le préambule de la revendication 1.

Par conséquent, la présente invention a pour but de remédier à ces inconvénients précités de l'art antérieur en définissant un nouveau type de distributeur qui est particulièrement bien adapté en remplacement d'un distributeur/pipette conventionnel. Le but premier de la présente invention est d'éviter toute perte de produit fluide provenant de la canule. Un autre but de la présente invention est de distribuer des gouttes bien formées qui ne sont pas sujettes à une pulvérisation au niveau de la sortie de distribution. Encore un autre but de la présente invention est d'améliorer l'actionnement du distributeur de manière à faciliter la distribution des gouttes avec une précision accrue. Encore un autre but de l'invention est de garantir une parfaite conservation du produit fluide stocké dans le réservoir du distributeur.

Pour ce faire, la présente invention propose un distributeur de produit fluide comprenant un réservoir de produit fluide, et une pompe comprenant un corps de pompe et une tige d'actionnement définissant entre eux une chambre de pompe ayant un volume maximal prédéterminé, la tige étant déplaçable axialement dans le corps pour faire varier le volume de la chambre de pompe, caractérisé en ce que le distributeur comprend en outre une canule de distribution montée sur la tige d'actionnement et comprenant une sortie de distribution apte à former une goutte de produit fluide qui se sépare de la canule par gravité, le volume maximal prédéterminé de la chambre de pompe étant sensiblement égal au volume de la goutte de produit fluide distribuée au niveau de la sortie de distribution. Ainsi, le produit fluide ne circule que dans un seul sens à travers la canule contrairement au distributeur/pipette de l'art antérieur précité. Le produit fluide en provenance du réservoir passe à travers la pompe, la tige d'actionnement, puis la canule pour enfin être délivré au niveau de la sortie de distribution sous forme de goutte. La mise en oeuvre d'une pompe évite la gestuelle du distributeur/pipette conventionnel de l'art antérieur, à savoir le trempage de la canule dans le réservoir de produit fluide. Ainsi, tout risque de perte de produit fluide accumulée autour de la canule ou directement du réservoir est évité. D'autre part, du fait que le volume de la chambre de pompe correspond environ au volume de la goutte délivrée au niveau de la sortie de distribution, une goutte de produit fluide est délivrée à chaque actionnement de la pompe. Il n'y a ainsi aucun risque de délivrer plus d'une goutte à chaque actionnement.

Selon un autre aspect intéressant de la présente invention, la canule de distribution définit un volume interne prédéterminé qui correspond à environ 3 à 7 fois, et de préférence 4 à 6 fois, le volume maximal de la chambre de pompe. De cette manière, le produit fluide issu de la tige d'actionnement de la pompe parvient dans un volume proportionnellement bien plus grand, de sorte qu'une perte de charge accrue se produit à l'intérieur de la canule, évitant ainsi toute distribution sous forme pulvérisée. En d'autres termes, la dose de produit fluide refoulée sous pression par la pompe à travers sa tige d'actionnement est amortie à l'intérieur de la canule de sorte qu'à sa sortie de distribution le produit fluide est distribué sous forme de goutte d'un volume suffisant pour se séparer de la canule par gravité. En quelque sorte, le volume interne important de la canule de distribution permet d'absorber la surpression créée par la pompe.

Selon une forme de réalisation, la canule de distribution peut être réalisée dans un matériau transparent, tel que du verre. Ainsi, le distributeur présente une configuration générale sensiblement similaire ou comparable à celle d'un distributeur/pipette de l'art antérieur.

Selon une forme de réalisation avantageuse, le distributeur comprend un poussoir pour actionner la pompe, ce poussoir étant solidaire du réservoir. De ce fait, le poussoir déplace le réservoir et le corps de pompe. Avantageusement, le distributeur comprend un étui dans lequel le réservoir est monté coulissant, la canule étant solidaire de l'étui. L'utilisateur peut ainsi saisir le distributeur par l'étui et actionner le poussoir avec son pouce. La gestuelle est alors sensiblement similaire ou identique à celle d'une pipette classique.

Selon un autre aspect de l'invention, le réservoir comprend un piston suiveur qui se déplace à mesure que du produit fluide est extrait du réservoir. Ainsi, le produit fluide n'est jamais en contact avec l'air extérieur.

Selon une autre caractéristique de l'invention, le volume maximal de la chambre de pompe est de l'ordre de 50 à 70 microlitres. Ce volume correspond selon l'invention à celui d'une goutte de produit fluide distribuée au niveau de la sortie de distribution.

Selon une forme de réalisation pratique, l'étui comprend une extrémité arrière ouverte au niveau de laquelle un poussoir est déplaçable axialement, et une extrémité avant dans laquelle la canule est montée fixement, en faisant saillie axialement avec sa sortie de distribution, le poussoir, lors de son actionnement, déplaçant le réservoir et le corps de pompe dans l'étui en comprimant un ressort de rappel. Le distributeur s'apparente alors à une pipette classique dont l'étui est maintenu dans la paume de l'utilisateur à l'aide de quatre doigts et dont le poussoir est actionné à l'aide du pouce.

Un des principes de l'invention réside sur le fait d'utiliser une pompe classique associée à une canule de distribution de goutte pour former un distributeur qui s'apparente à un distributeur/pipette de l'art antérieur. Un autre principe de la présente invention est d'utiliser la canule de distribution comme espace d'amortissement de produit fluide pour garantir la parfaite formation de la goutte au niveau de la sortie de distribution de la canule. Encore un autre principe est d'utiliser un étui pour contenir le réservoir, la pompe et la canule.

La présente invention sera maintenant plus amplement décrite en référence aux dessins joints donnant à titre d'exemple non limitatif un mode de réalisation de la présente invention.

Sur les figures :

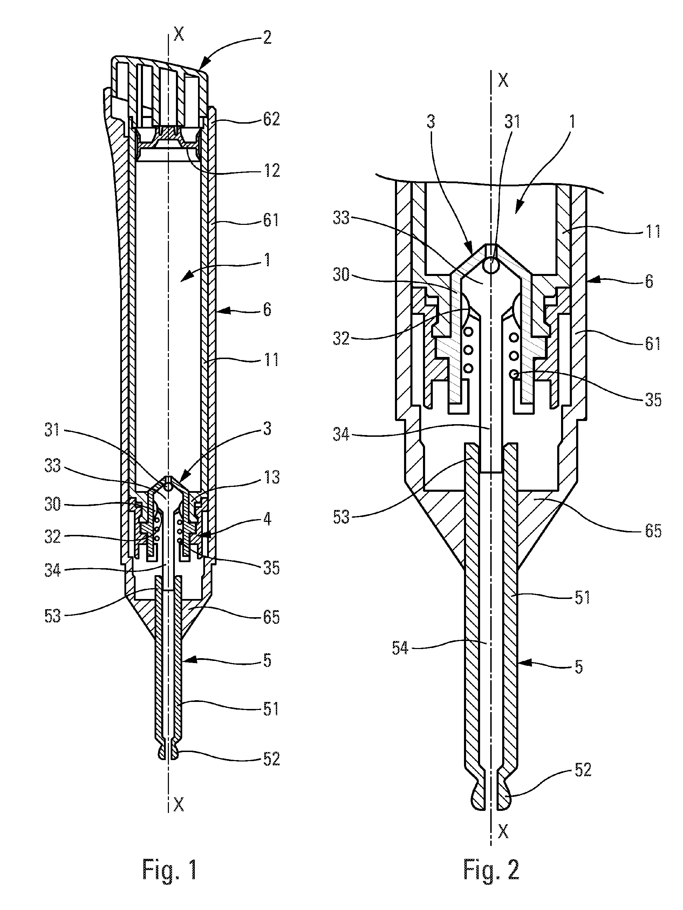

La figure 1 est une vue en section transversale verticale à travers un distributeur de produit fluide selon l'invention, et
La figure 2 est une vue agrandie de la partie basse de la figure 1.

Le distributeur représenté sur les figures comprend six éléments constitutifs, à savoir un réservoir 1, un poussoir 2, une pompe 3, une bague de fixation 4, une canule de distribution 5 et un étui 6. Tous ces éléments constitutifs sont disposés selon un axe longitudinal X : certains éléments constitutifs peuvent présenter une symétrie de révolution autour de cet axe X.

Le réservoir de produit fluide 1 comprend un fût de coulissement cylindrique 11 à l'intérieur duquel est monté de manière coulissante un piston suiveur 12. Lorsque le réservoir est rempli, le piston 12 est situé à une extrémité du fût 11, opposée à l'autre extrémité formant un col 13. Il est ainsi constitué un volume de capacité variable, à mesure que le piston suiveur 12 se déplace à l'intérieur du fût de coulissement 11. Avec ce type de réservoir, le produit fluide contenu dans le réservoir est toujours à l'abri de l'air extérieur, et ne peut ainsi pas être détérioré.

Le poussoir 2 est disposé à l'extrémité du fût de coulissement 11 opposée au col 13, c'est-à-dire juste au-dessus du piston suiveur 12, lorsque le réservoir est rempli de produit fluide. Le poussoir 2 est solidaire du fût 11. En variante, le poussoir 2 peut même faire partie intégrante du fût 11 ou du réservoir 1. Ainsi, en appuyant sur le poussoir 2, une pression est exercée sur le réservoir 1, comme on le verra ci-après.

La pompe 3 est fixée dans l'ouverture 13 du réservoir à l'aide d'une bague de fixation 4. La pompe 3 comprend un corps de pompe 30 formant intérieurement une chambre de pompe 33 de capacité variable, mais définissant un volume maximal prédéterminé en position de repos. La pompe est délimitée par le corps de pompe 30, mais également par une tige d'actionnement 34 qui est déplaçable axialement à l'intérieur du corps de pompe. La tige d'actionnement 34 peut par exemple être pourvue d'un piston en coulissement étanche à l'intérieur du corps de pompe 30. La pompe 3 est pourvue d'un clapet d'entrée 31 et d'un clapet de sortie qui peut être intégré ou solidaire de la tige d'actionnement 34. Ainsi, en appuyant sur le bouton poussoir 2 le volume de la chambre de pompe 33 varie à partir de son volume maximal qui peut être de l'ordre de 50 à 70 microlitres. La tige d'actionnement 34 est déplacée par rapport au corps de pompe 3 à partir de sa position de repos à l'encontre d'un ressort de rappel 35 qui est situé à l'extérieur de la chambre de pompe 33. La dose de produit fluide distribuée correspond sensiblement au volume maximal prédéterminé de la chambre de pompe. En d'autres termes, la pompe distribue à chaque actionnement sensiblement la totalité du produit fluide présent dans la chambre de pompe. Le ressort 35 ramène ainsi la chambre de pompe 33 dans sa configuration de volume maximal prédéterminé. Il s'agit là d'une conception tout à fait classique pour une pompe manuelle dans les domaines de la parfumerie, de la cosmétique ou encore de la pharmacie, à l'exception du ressort 35 qui est situé hors de la chambre de pompe.

La canule de distribution 5 peut être réalisée en un matériau transparent comme par exemple du verre, ou une matière plastique. La canule 5 peut présenter une symétrie de révolution parfaite autour de l'axe X. La canule 5 comprend un manchon de raccordement 53 qui est engagé autour de l'extrémité libre de la tige d'actionnement 34 de la pompe 3. La canule 5 forme ensuite une section principale cylindrique allongée 51 qui définit un volume interne prédéfini. A son extrémité, la canule 5 forme une sortie de distribution 52 apte à former une goutte de produit fluide qui se sépare de la canule par gravité. Le volume des gouttes distribuées est de l'ordre de 50 à 70 microlitres, tout comme le volume maximal prédéfini de la chambre de pompe 33. La canule de distribution 5 présente une configuration générale allongée, semblable à une pipette classique. Le volume interne de la canule 5 correspond environ à 3 à 7 fois, et de préférence 4 à 6 fois le volume maximal de la chambre de pompe 33 qui est de l'ordre de 50 à 70 microlitres. En d'autres termes, le volume interne de la canule est de l'ordre de 150 à 500 microlitres. De préférence, le volume interne est de l'ordre de 200 à 400 microlitres avec une préférence pour 300 microlitres. Ainsi, le contenu de la chambre de pompe 33 refoulé sous pression à travers la tige d'actionnement 34 parvient dans la canule qui est déjà remplie de produit fluide. Le volume considérablement plus grand de la canule par rapport à la dose distribuée permet de créer une perte de charge considérable dans la canule, ce qui permet d'éviter la distribution du produit fluide sous forme pulvérisée. Le produit fluide est donc amorti dans la canule avant de s'en détacher par gravité sous la forme d'une goutte dont la contenance est de l'ordre de 50 à 70 microlitres.

L'étui 6 constitue une coque creuse dans laquelle est logé le réservoir 1, la pompe 3 et une partie de la canule 5. L'étui 6 comprend une extrémité supérieure ouverte au niveau de laquelle est situé le poussoir 2 et une extrémité inférieure qui se prolonge par la canule 5 qui est montée fixement à l'intérieur d'une partie de tête 65 de l'étui 6 : l'étui et la canule peuvent être réalisés de manière monobloc, par exemple par bi-injection. Le réservoir 1, le corps de pompe 30 et la bague de fixation 4 sont déplaçables axialement en va-et-vient à l'intérieur de l'étui 6 par appui sur le poussoir 2, ce qui a pour effet de comprimer le ressort 35. De cette manière, l'utilisateur peut saisir le distributeur par l'étui 6 dans la paume de sa main et appuyer sur le poussoir 2 à l'aide de son pouce. L'actionnement est ainsi similaire ou semblable à celui d'une pipette classique. Etant donné que l'étui 6 masque complètement le réservoir 1 et la pompe 3, il n'a même pas conscience qu'il actionne une pompe en appuyant sur le poussoir 2. Il remarque simplement qu'en appuyant sur le poussoir 2 une goutte bien formée de produit fluide tombe par gravité à partir du bout de la canule 5.

Le fonctionnement correct du distributeur provient de la correspondance de capacité entre la chambre de pompe et la goutte distribuée, ainsi que du volume interne important de la canule qui sert de chambre d'amortissement de produit fluide avant formation de la goutte.

## Revendications

1. Distributeur de produit fluide comprenant :
- un réservoir de produit fluide (1), et
- une pompe (3) comprenant un corps de pompe (30) et une tige d'actionnement (34) définissant entre eux une chambre de pompe (33) ayant un volume maximal prédéterminé, la tige (34) étant déplaçable axialement dans le corps (30) pour faire varier le volume de la chambre de pompe (33),
dans lequel le distributeur comprend en outre une canule de distribution (5) montée sur la tige d'actionnement (34) et comprenant une sortie de distribution (52) apte à former une goutte de produit fluide qui se sépare de la canule (5) par gravité, le volume maximal prédéterminé de la chambre de pompe (33) étant sensiblement égal au volume de la goutte de produit fluide distribuée au niveau de la sortie de distribution (52).
**caractérisé en ce que** la canule de distribution (5) définit un volume interne prédéterminé qui correspond à environ 3 à 7 fois le volume maximal de la chambre de pompe (33).

2. Distributeur selon la revendication 1, dans lequel la canule de distribution (5) définit un volume interne prédéterminé qui correspond à environ 4 à 6 fois le volume maximal de la chambre de pompe (33).

3. Distributeur selon la revendication 1 ou 2, dans lequel la canule de distribution (5) est réalisée dans un matériau transparent, tel que du verre.

4. Distributeur selon l'une quelconque des revendications précédentes, dans lequel la canule (5) est allongée, présentant ainsi une configuration générale de pipette.

5. Distributeur selon l'une quelconque des revendications précédentes, comprenant un poussoir (2) pour actionner la pompe (3), ce poussoir (2) étant solidaire du réservoir (1).

6. Distributeur selon l'une quelconque des revendications précédentes, comprenant un étui (6) dans lequel le réservoir (1) est monté coulissant, la canule (5) étant solidaire de l'étui (6), et avantageusement réalisées par bi-injection avec l'étui.

7. Distributeur selon la revendication 6, dans lequel l'étui (6) comprend une extrémité arrière ouverte (62) au niveau de laquelle un poussoir (2) est déplaçable axialement, et une extrémité avant (65) dans laquelle la canule (5) est montée fixement, en faisant saillie axialement avec sa sortie de distribution (52), le poussoir (2), lors de son actionnement, déplaçant le réservoir (1) et le corps de pompe (30) dans l'étui (6) en comprimant un ressort de rappel (35).

8. Distributeur selon l'une quelconque des revendications précédentes, dans lequel le réservoir (1) comprend un piston suiveur (12) qui se déplace à mesure que du produit fluide est extrait du réservoir.

9. Distributeur selon l'une quelconque des revendications précédentes, dans lequel le volume maximal de la chambre de pompe (33) est de l'ordre de 50 à 70 microlitres.

## Patentansprüche

1. Spender für ein fluides Produkt, aufweisend:
- einen Behälter für fluides Produkt (1) und
- eine Pumpe (3), die ein Pumpengehäuse (30) und eine Betätigungsstange (34) aufweist, welche zwischen sich eine Pumpenkammer (33) mit einem vorbestimmten maximalen Volumen definieren, wobei die Stange (34) axial in dem Gehäuse (30) verschiebbar ist, um das Volumen der Pumpenkammer (33) zu verändern,
wobei der Spender des Weiteren eine Ausgabekanüle (5) aufweist, welche auf der Betätigungsstange (34) montiert ist und eine Ausgabeöffnung (52) aufweist, die dazu geeignet ist, einen Tropfen von fluidem Produkt zu bilden, der sich durch Schwerkraft von der Kanüle (5) löst, wobei das vorbestimmte maximale Volumen der Pumpenkammer (33) im Wesentlichen gleich dem Volumen des Tropfens von fluidem Produkt ist, das an der Ausgabeöffnung (52) ausgegeben wird,
**dadurch gekennzeichnet, dass** die Ausgabekanüle (5) ein vorbestimmtes Innenvolumen definiert, welches in etwa 3- bis 7-mal dem maximalen Volumen der Pumpenkammer (33) entspricht.

2. Spender nach Anspruch 1, wobei die Ausgabekanüle (5) ein vorbestimmtes Innenvolumen definiert, welches in etwa 4- bis 6-mal dem maximalen Volumen der Pumpenkammer (33) entspricht.

3. Spender nach Anspruch 1 oder 2, wobei die Ausgabekanüle (5) aus einem transparenten Material, wie Glas, gefertigt ist.

4. Spender nach einem der vorhergehenden Ansprüche, wobei die Kanüle (5) langgestreckt ist, wobei sie so eine im Allgemeinen pipettenartige Konfiguration aufweist.

5. Spender nach einem der vorhergehenden Ansprüche, aufweisend eine Druckvorrichtung (2) zum Betätigen der Pumpe (3), wobei diese Druckvorrichtung (2) in einem Stück mit dem Behälter (1) gebildet ist.

6. Spender nach einem der vorhergehenden Ansprüche, aufweisend eine Hülse (6), in welcher der Behälter (1) gleitend montiert ist, wobei die Kanüle (5) in einem Stück mit der Hülse (6) gebildet und vorteilhafterweise durch BiInjektion mit der Hülse verwirklicht ist.

7. Spender nach Anspruch 6, wobei die Hülse (6) ein hinteres offenes Ende (62), an welchem eine Druckvorrichtung (2) axial verschiebbar ist, und ein vorderes Ende (65) aufweist, in welchem die Kanüle (5) fest montiert ist, wobei sie axial mit ihrer Ausgabeöffnung (52) vorsteht, wobei die Druckvorrichtung (2) bei ihrer Betätigung den Behälter (1) und das Pumpengehäuse (30) in der Hülse (6) verschiebt und dabei eine Rückstellfeder (35) zusammendrückt.

8. Spender nach einem der vorhergehenden Ansprüche, wobei der Behälter (1) einen Nachlaufkolben (12) aufweist, der sich in dem Maße verschiebt, in dem das fluide Produkt aus dem Behälter entnommen wird.

9. Spender nach einem der vorhergehenden Ansprüche, wobei das maximale Volumen der Pumpenkammer (33) im Bereich von 50 bis 70 Mikrolitern liegt.

## Claims

1. A fluid dispenser comprising:
• a fluid reservoir (1); and
• a pump (3) comprising a pump body (30) and an actuator rod (34), defining between them a pump chamber (33) having a predetermined maximum volume, the rod (34) being axially movable in the body (30) so as to vary the volume of the pump chamber (33);
wherein the dispenser further comprises a dispenser cannula (5) that is mounted on the actuator rod (34) and that includes a dispenser outlet (52) that is suitable for forming a drop of fluid that separates from the cannula (5) by gravity, the determined maximum volume of the pump chamber (33) being substantially equal to the volume of the drop of fluid that is dispensed at the dispenser outlet (52);
the dispenser being **characterized in that** the dispenser cannula (5) defines a predetermined internal volume that corresponds to about 3 to 7 times the maximum volume of the pump chamber (33).

2. A dispenser according to claim 1, wherein the dispenser cannula (5) defines a predetermined internal volume that corresponds to about 4 to 6 times the maximum volume of the pump chamber (33).

3. A dispenser according to claim 1 or claim 2, wherein the dispenser cannula (5) is made out of a transparent material, such as glass.

4. A dispenser according to any preceding claim, wherein the cannula (5) is elongate, thereby presenting a general configuration of a pipette.

5. A dispenser according to any preceding claim, including a pusher (2) for actuating the pump (3), the pusher (2) being secured to the reservoir (1).

6. A dispenser according to any preceding claim, including a casing (6) in which the reservoir (1) is slidably mounted, the cannula (5) being secured to the casing (6), and advantageously being made by bi-injection with the casing.

7. A dispenser according to claim 6, wherein the casing (6) includes an open trailing end (62) in which a pusher (2) is axially movable, and a leading end (65) in which the cannula (5) is mounted in stationary manner, protecting axially with its dispenser outlet (52), the pusher (2), during its actuation, moving the reservoir (1) and the pump body (30) in the casing (6), compressing a return spring (35).

8. A dispenser according to any preceding claim, wherein the reservoir (1) includes a follower piston (12) that moves as fluid is extracted from the reservoir.

9. A dispenser according to any preceding claim, wherein the maximum volume of the pump chamber (33) lies in the range about 50 mL to about 70 mL.
